# EUROPÄISCHE PATENTSCHRIFT

(11) **EP 4 117 871 B1**
(45) Veröffentlichungstag und Bekanntmachung des Hinweises auf die Patenterteilung: **18.12.2024**
(21) Anmeldenummer: 21705865.0
(22) Anmeldetag: 05.02.2021
(51) Int. Cl.: B26B 13/16

(54) **SCHNEIDEWERKZEUG, INSBESONDERE ZUM SCHNEIDEN VON FLACHEN LEBENSMITTELN**
CUTTING TOOL, IN PARTICULAR FOR CUTTING FLAT FOODSTUFFS
OUTIL DE COUPE, EN PARTICULIER POUR COUPER DES PRODUITS ALIMENTAIRES PLATS

(30) Priorität: 13.03.2020 AT 502152020
(43) Veröffentlichungstag der Anmeldung: 18.01.2023
(73) Patentinhaber: Vrdoljak, Ivica, 9020 Klagenfurt (AT)
(72) Erfinder: Vrdoljak, Ivica, 9020 Klagenfurt (AT)
(74) Vertreter: Schwarz & Partner Patentanwälte GmbH
(86) Internationale Anmeldenummer: PCT/AT2021/060043
(87) Internationale Veröffentlichungsnummer: WO 2021/179023

(56) Entgegenhaltungen:
- AT-B- 395 837
- GB-A- 276 160
- US-A- 1 979 743
- US-A- 2 497 587

## Beschreibung

Die Erfindung betrifft ein Schneidewerkzeug, wie in Anspruch 1 definiert.

Aus der AT 395 837 B ist ein Messer zum Zerteilen von flachen Speisen bekannt. Bei dieser Lösung ist eine Klinge einstückig an einem Griff ausgebildet und eine Schneide gelenkig mit der Klinge verbunden. Weiters ist eine Feder vorgesehen, welche die Schneide weg von der Klinge in eine Ruhestellung drückt. Um die flache Speise zu zerteilen wird die Schneide unter die Speise geführt und die Klinge oberhalb der Speise positioniert. Durch Andrücken der Klinge in Richtung der Speise wird diese zerkleinert. Durch Reduktion des Drucks auf die Klinge wird diese von der Schneide weggedrückt, wodurch das Messer weitergeschoben werden kann, um einen nächsten Teil der Speise zu zerkleinern.

Die Feder dieses Messers ist sowohl an der Klinge als auch an der Schneide befestigt und stützt sich an einem Bolzen ab, welcher die Klinge gelenkig mit der Schneide verbindet. Dies hat den Nachteil, dass die Feder auf der Schneide aufliegt. Die Dicke des Messers an dieser Stelle ist somit durch die Feder, die Schneide und die dahinter angeordnete Klinge gegeben. Bei dieser Anordnung ist das Messer daher im Bereich der Schneide sehr dick, wodurch Essensreste leicht in den Zwischenraum zwischen Feder und Schneide gelangen können, was zu einer Fehlfunktion des Messers führt.

Aus dem gattungsfremden Stand der Technik der AT 519 779 A2, der sich mit Schneidewerkzeugen mit zwei Griffen befasst, ist bekannt, ein gebogenes Federelement zur Spreizung der zwei Griffe und damit der zwei Klingen einzusetzen. Auch bei dieser Ausführungsform liegt das Federelement auf einer Klinge bzw. auf einem Griff auf, sodass sich die Dicke durch die Feder und die beiden hintereinander angeordneten Klingen ergibt.

Diese Ausführungsform weist somit dieselben Nachteile auf wie das Messer der AT 395 837 B.

Weitere Nachteile, die bei beiden Ausführungsformen des Standes der Technik auftreten, sind laute Geräusche beim Schneiden mit dem Messer bzw. des Schneidewerkzeugs.

Es ist daher die Aufgabe der Erfindung, ein eingriffiges Schneidewerkzeug bereitzustellen, welches im Bereich des Federelements möglichst dünn ausgebildet und somit fehlerunanfälliger ist. Weiters soll das Schneidewerkzeug einen möglichst geräuscharmen Betrieb ermöglichen.

Diese Aufgabe wird durch ein Schneidewerkzeug gelöst, insbesondere ein Schneidewerkzeug zum Schneiden von flachen Lebensmitteln, umfassend ein erstes Schneidelement und ein zweites Schneidelement, welches am ersten Schneidelement um eine Drehachse verschwenkbar gelagert ist, wobei das erste Schneidelement eine Oberschneide und einen Griff aufweist, zwischen welchen die Drehachse angeordnet ist, und das zweite Schneidelement eine Unterschneide und einen grifflosen Endbereich aufweist, zwischen welchen die Drehachse angeordnet ist, wobei das Schneidewerkzeug ferner ein Federelement aufweist, welches mit einem ersten Ende an der Oberschneide und mit einem zweiten Ende an der Unterschneide befestigt ist und das erste und das zweite Schneidelement in eine vorbestimmte Ruhelage spreizt, wobei das Federelement zumindest teilweise um den Endbereich des zweiten Schneidelements geführt ist, und wobei das Federelement über einen ersten Schnittbereich einer Schnittbewegung der Unterschneide einen geringeren Widerstand entgegen als über einen zweiten Schnittbereich, wobei der erste Schnittbereich zwischen der Ruhelage des zweiten Schneidelements und einem vorbestimmten Winkel und der zweite Schnittbereich zwischen dem vorbestimmten Winkel des zweiten Schneidelements und der geschlossenen Stellung des zweiten Schneidelements liegt.

Diese Lösung ermöglicht, dass das Federelement in einem Bereich hinter dem zweiten Schneidelement geführt wird und nicht auf diesem aufliegt, sodass das Schneidewerkzeug insgesamt eine geringere Dicke aufweist. Überdies neigt das Schneidewerkzeug auch nicht dazu, dass Lebensmittelreste in den Zwischenraum zwischen dem Federelement und dem zweiten Schneidelement geraten, wodurch die Anzahl an Fehlfunktionen reduziert wird.

Ein besonderes Problem des Standes der Technik ist, dass üblicherweise bei jedem Schnitt mit bekanntem Schneidewerkzeug ein Geräusch auftritt. Dies ist dadurch bedingt, dass sich eingangs beispielsweise hartes Brot oder ähnliches zwischen der Oberschneide und der Unterschneide befindet. Sobald der mit dem Schneidewerkzeug aufgebrachte Druck groß genug ist, wird das harte Brot durchbrochen und die Unterschneide und die Oberschneide werden schnell zusammengedrückt, wodurch sich die beiden Schneiden mit einer großen Geschwindigkeit annähern. Die Unterschneide prallt dadurch auf einen Anschlagbolzen oder auf einen anderen Stopper auf, wodurch ein auftretendes Geräusch auch über die Schneiden auf einen darunterliegenden Teller übertragen wird. Beim Schneiden mit dem bekannten Schneidewerkzeug tritt somit ein äußerst lautes und im Hausgebrauch nerviges Geräusch auf. Um dieses Problem zu überwinden, setzt das Federelement erfindungsgemäß über einen ersten Schnittbereich einer Schnittbewegung der Unterschneide einen geringeren Widerstand entgegen als über einen zweiten Schnittbereich, wobei der erste Schnittbereich zwischen der Ruhelage des zweiten Schneidelements und einem vorbestimmten Winkel und der zweite Schnittbereich zwischen dem vorbestimmten Winkel des zweiten Schneidelements und der geschlossenen Stellung des zweiten Schneidelements liegt. Durch den großen Widerstand vor dem Zusammentreffen der beiden Schneiden wird die Relativgeschwindigkeit der beiden Schneiden zueinander reduziert und die Aufprallgeschwindigkeit der Schneiden verringert. Wenn der Widerstand groß genug ist, kann ein Aufprallen der Schneiden sogar verhindert werden, wodurch überhaupt kein Geräusch auftritt.

In der vorgenannten Ausführungsform kann das Federelement beispielsweise entsprechend ausgebildet, z.B. gekrümmt, sein, um den variablen Widerstand zu erzielen. Besonders bevorzugt nimmt jedoch das Federelement im ersten Schnittbereich einen Abstand zum Endbereich ein und liegt im zweiten Schnittbereich am Endbereich an. Dies ermöglich eine besonders einfache Ausführungsform, um den veränderlichen Widerstand zu ermöglichen.

Bevorzugt ist, wenn das Federelement um den gesamten Endbereich geführt ist und beispielsweise nur im Bereich einer Befestigungsstelle des Federelements oder gar nicht auf der Unterschneide aufliegt. Bei dieser Lösung ist das Federelement insbesondere im Bereich des Griffs neben der Drehachse hinter dem Endbereich geführt, sodass die Feder in diesem Bereich hinter dem Endbereich aufgenommen ist.

Um das Auftreten von unerwünschten Geräuschen weiter zu reduzieren, kann das Federelement derart an der Oberschneide befestigt sein, dass die Unterschneide in der geschlossenen Stellung des zweiten Schneidelements am Federelement anliegt. Das Federelement verhindert in dieser Ausführungsform ein unmittelbares Auftreffen der Unterschneide auf einem Bolzen oder ähnlichem. Selbst wenn das Federelement aus Metall gefertigt ist, wirkt dieses als zusätzliche Dämpfung. Eine besonders einfache Umsetzung dieser Ausführungsform kann erfolgen, wenn das Federelement mit einem Bolzen an der Oberschneide befestigt ist und sich das Federelement in der geschlossenen Stellung des zweiten Schneidelements zwischen der Unterschneide und dem Bolzen befindet.

Um zu verhindern, dass das Federelement vom Endbereich rutscht, können insbesondere zwei alternative Ausführungsformen vorgesehen sein. In der ersten bevorzugten Ausführungsform weist der Endbereich des zweiten Schneidelements eine Abschrägung auf, mittels welcher das Federelement am Endbereich gehalten wird. In der zweiten bevorzugten Ausführungsform weist der Endbereich des zweiten Schneidelements eine Rille auf, mittels welcher das Federelement am Endbereich gehalten wird. Diese beiden Ausführungsformen ermöglichen eine Sicherung des Federelements ohne zusätzliche Hilfsmittel wie Klammern und sind daher äußerst fehlerunanfällig.

Bevorzugt weist die Unterschneide endseitig eine von der Drehachse abgewandte Nase auf, welche in der geschlossenen Stellung des zweiten Schneidelements besonders bevorzugt über die Oberschneide hervorragt. Sollten Lebensmittelreste zwischen die beiden Schneiden gelangen und ein Öffnen des Schneidewerkzeugs verhindern, kann die Nase dazu eingesetzt werden, die beiden Schneiden zu trennen, ohne dass die Schneiden manuell voneinander getrennt werden müssen.

Da das Schneidewerkzeug bevorzugt zum Schneiden von Lebensmitteln eingesetzt werden soll, wird bevorzugt vorgesehen, dass die Unterschneide eine Länge von bis zu 12 cm aufweist. Größere Unterschneiden eignen sich nicht für den Haushaltsgebrauch.

Vorteilhafte und nicht einschränkende Ausführungsformen der Erfindung werden nachfolgend anhand der Zeichnungen näher erläutert.
Figur 1 zeigt ein erfindungsgemäßes Schneidewerkzeug mit geöffneter Unterschneide.
Figur 2 zeigt das Schneidewerkzeug von Figur 1 in einer Draufsicht.
Figur 3 zeigt das Schneidewerkzeug von Figur 1, wobei die Unterschneide in einem vorbestimmten Winkel zur Oberschneide steht.
Figur 4 zeigt das Schneidewerkzeug von Figur 1 mit geschlossener Unterschneide.
Figur 5 zeigt ein Diagramm, bei der der Öffnungswinkel der Unterschneide auf der Abszisse und eine benötigte Federkraft auf der Ordinate aufgetragen ist.
Figur 6 zeigt den Endbereich des Schneidwerkzeugs von Figur 1 in einer ersten Variante.
Figur 7 zeigt den Endbereich des Schneidwerkzeugs von Figur 1 in einer zweiten Variante.

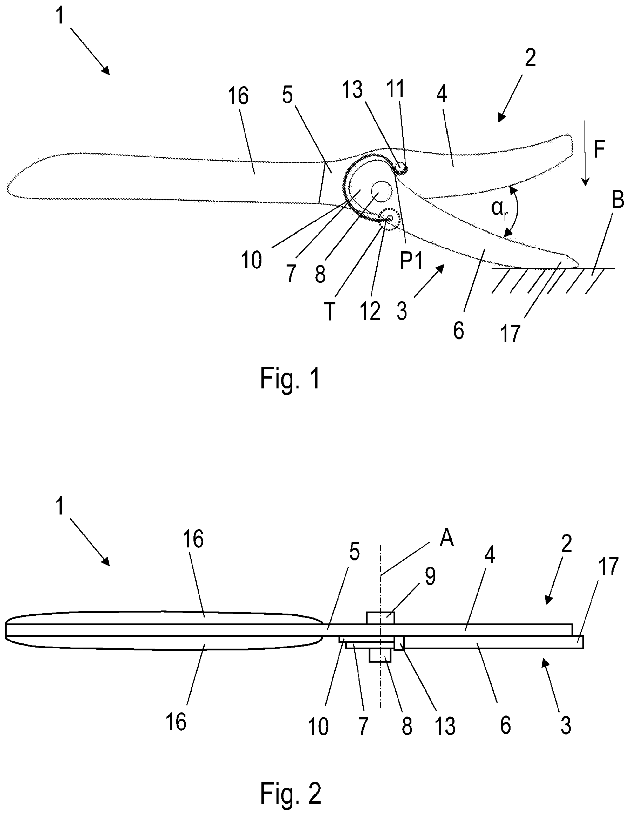

Figur 1 zeigt ein Schneidewerkzeug 1, welches insbesondere zum Schneiden von flachen Lebensmitteln eingesetzt wird. Es sei jedoch festgehalten, dass die Erfindung nicht auf diesen Einsatzzweck beschränkt ist. Insbesondere kann das Schneidewerkzeug 1 auch zum Schneiden von Papier, Karton, Pappe, Metall oder ähnlichem eingesetzt werden, wofür das Schneidewerkzeug 1 unter Umständen auch aus anderen Materialien und/oder in anderen Dimensionen ausgebildet werden kann.

Aus Figur 1 ist ersichtlich, dass das Schneidewerkzeug 1 ein erstes Schneidelement 2 und ein zweites Schneidelement 3 umfasst. Das erste Schneidelement 2 setzt sich aus einer Oberschneide 4 und einem Griff 5 zusammen. Das zweite Schneidelement 3 setzt sich aus einer Unterschneide 6 und einem grifflosen Endbereich 7 zusammen. Die Oberschneide 4 und die Unterschneide 6 schließen einen Winkel αᵣ ein und weisen jeweils eine Schneidkante auf, die der jeweils anderen Schneide 4, 5 zugewandt ist.

Das zweite Schneidelement 3 ist am ersten Schneidelement 2 um eine Drehachse A verschwenkbar gelagert, siehe Figur 2. Die Lagerung kann beispielsweise durch eine Schraube 8 erfolgen, die durch das erste Schneidelement 2 und das zweite Schneidelement 3 geführt ist und beispielsweise auf der dem Schraubenkopf abgewandten Seite mittels einer Mutter 9 fixiert ist. Die Art der Lagerung kann jedoch beliebig gewählt werden. Die Drehachse A ist zwischen der Oberschneide 4 und dem Griff 5 bzw. zwischen der Unterschneide 6 und dem Endbereich 7 angeordnet. Als Trennlinie zwischen Unterschneide 6 und Endbereich 7 kann beispielsweise eine Linie herangezogen werden, die durch die Drehachse A verläuft und im Wesentlichen normal zu der Schneidkante der Unterschneide 6 verläuft. Wenn die Schneidkante gekrümmt bzw. gebogen ist, kann eine Mittellinie der Schneidkante herangezogen werden.

Um einen einfachen Schneidbetrieb zu erzielen, umfasst das Schneidewerkzeug 1 ein Federelement 10, welches mit einem ersten Ende 11 an der Oberschneide 4 und mit einem zweiten Ende 12 an der Unterschneide 6 befestigt ist. Das Federelement 10 ist beispielsweise als gebogener Draht ausgebildet und spreizt das erste und das zweite Schneidelement 2, 3 in die in Figur 1 dargestellte Ruhelage, d.h. das Federelement 10 übt eine Kraft auf die Unterschneide 6 aus, sodass diese von der Oberschneide 4 weggedrückt wird.

Um Lebensmittel oder ähnliches zu schneiden wird das Schneidewerkzeug 1 am Griff 5 angegriffen und mit der Unterschneide 6 auf einen Boden B aufgesetzt. Danach wird das zu schneidende Lebensmittel zwischen der Oberschneide 4 und der Unterschneide 6 platziert und eine Kraft F auf das erste Schneidelement 2 aufgebracht, sodass sich die Unterschneide 6 durch den Widerstand des Bodens B entgegen der Federkraft in Richtung der Oberschneide 4 bewegt.

Die Anbringung des ersten Endes 11 des Federelements 10 an der Oberschneide 4 kann in einer Ausführungsform dadurch erfolgen, dass ein Bolzen 13 an der Oberschneide 4 montiert ist, beispielsweise in diese eingeschraubt ist. Das erste Ende 11 des Federelements 10 kann hierbei um den Bolzen 13 gewickelt sein, wie dies in Figur 1 dargestellt ist. Das zweite Ende 12 des Federelements 10 kann wie dargestellt in ein Loch der Unterschneide 6 eingehängt werden. Es kann jedoch auch vorgesehen werden, dass sowohl das erste Ende 12 als auch das zweite Ende 12 um einen Bolzen gewickelt werden oder in ein Loch eingehängt werden.

Durch einen Druck auf die Unterschneide 6 in Richtung der Oberschneide 4 kann die Unterschneide 6 gegenüber der Oberschneide 4 von der Ruhestellung in eine geschlossene Stellung verschwenkt werden. Figur 1 stellt die Unterschneide 6 in der Ruhestellung dar, d.h. in der maximal ausgelenkten Stellung. In dieser Stellung schließen die Oberschneide 4 und die Unterschneide 6 einen Winkel von αᵣ ein. Im dargestellten Beispiel ist αᵣ = 40°.

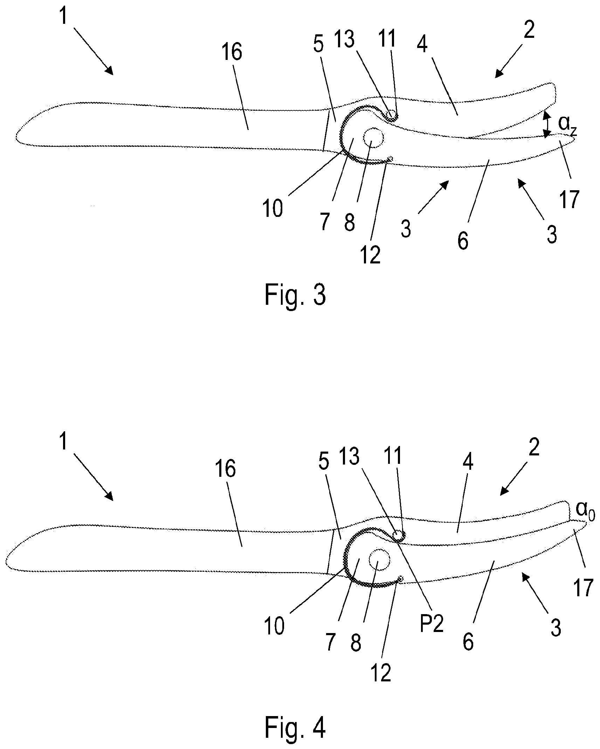

Figur 3 zeigt die Unterschneide 6 in einer Zwischenstellung, nachdem sie von der Ruhestellung in Richtung der geschlossenen Stellung gedrückt wurde. In dieser Zwischenstellung schließen die Oberschneide 4 und die Unterschneide 6 einen Winkel von α_{z} ein. Im dargestellten Beispiel ist α_{z} = 10°.

Figur 4 zeigt die Unterschneide 6 schließlich in einer geschlossenen Stellung, nachdem sie von der Ruhestellung entgegen der Federkraft zusammengedrückt wurden. In dieser geschlossenen Stellung ist zwischen den Schneidkanten der Oberschneide 4 und der Unterschneide 6 üblicherweise kein verbleibender Zwischenraum vorgesehen, sodass ein Winkel von α₀ = 0° vorliegt. Je nach Ausführungsform kann dieser Winkel α₀ jedoch auch von 0° abweichen, um eine geringe Restöffnung zwischen den Schneidkanten zu lassen.

Die Ruhestellung von Figur 1 ist dadurch gegeben bzw. begrenzt, dass der Endbereich 7 des zweiten Schneidelements 3 an einer Position P1 an dem Federelement 10 anliegt, siehe Figur 1. Alternativ könnte das zweite Schneidelement 3 auch unmittelbar auf dem Bolzen 13 zu liegen kommen oder eine gesonderte Stoppeinrichtung vorgesehen werden, welche die Endposition des zweiten Schneidelements 3 vorgibt.

Die geschlossene Stellung von Figur 4 ist dadurch gegeben bzw. begrenzt, dass die Unterschneide 6 des zweiten Schneidelements 3 an einer Position P2 an dem Federelement 10 anliegt, siehe Figur 4. Dadurch schlägt die Unterschneide 6 bei einem schnellen Verklappen der Unterschneide 6 in die geschlossene Stellung nicht unmittelbar auf dem Bolzen 13 auf, was zu lauten Geräuschen führen würde. Je nach Ausführungsform könnte jedoch auch vorgesehen werden, dass die Unterschneide 6 in der geschlossenen Stellung trotzdem auf dem Bolzen 13 oder einem gesonderten, bevorzugt nicht-metallischen, Stopper zu liegen kommt.

Um das Schneidewerkzeug 1 möglichst kompakt auszubilden, ist das Federelement 10 zumindest teilweise um den Endbereich 7 des zweiten Schneidelements 3 geführt. Bevorzugt ist das Federelement 10 um den gesamten Endbereich 7 geführt, sodass das Federelement 10 überhaupt nicht auf jener Breitseite des Endbereichs 7 des zweiten Schneidelements 3 aufliegt, die der Oberschneide 4 abgewandt ist. Wie in Figur 1 gezeigt liegt das Federelement 10 nur in jenem Teilbereich T auf der Breitseite der Unterschneide 6 des zweiten Schneidelements 3 auf, an dem das zweite Ende 12 des Federelements 10 an der Unterschneide 6 befestigt ist. Alternativ zu der dargestellten Ausführungsform kann das zweite Ende 12 des Federelements 10 auch an jener Breitseite der Unterschneide 6 befestigt sein, die der Oberschneide 4 zugewandt ist, sodass das Schneidewerkzeug 1 noch kompakter ausgebildet sein kann. Somit kann bevorzugt auch vorgesehen sein, dass das Federelement 10 überhaupt nicht auf jener Breitseite des zweiten Schneidelements 3 aufliegt, die der Oberschneide 4 abgewandt ist.

Das Federelement 10 kann überdies derart ausgestaltet sein, dass das Federelement 10 über einen ersten Schnittbereich einer Schnittbewegung der Unterschneide 6 einen geringeren Widerstand entgegensetzt als über einen zweiten Schnittbereich. Der erste Schnittbereich ist als jener Schnittbereich definiert, der zwischen der Ruhelage (Figur 1) des zweiten Schneidelements 3 und einem vorbestimmten Winkel α_{z} liegt, der in Figur 3 dargestellt ist. Der zweite Schnittbereich ist als jener Schnittbereich definiert, der zwischen der Ruhelage dem vorbestimmten Winkel α_{z} (Figur 3) und der geschlossenen Stellung mit Winkel α₀ (Figur 4) liegt.

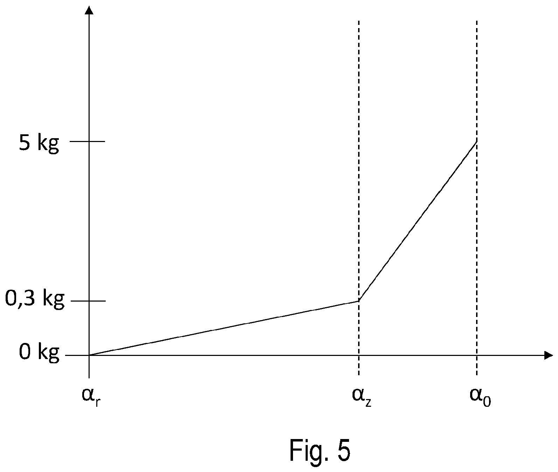

Figur 5 zeigt das Schnittverhalten eines derartigen Federelements 10 in einem Diagramm. Darin ist der Winkel zwischen der Oderschneide 4 und der Unterschneide 6 auf der Abszisse und ein entsprechender Federwiderstand in kg auf der Ordinate aufgetragen. Es ist ersichtlich, dass die benötigte Kraft, um die Unterschneide 6 um einen bestimmten Winkelgrad in Richtung der Oberschneide 4 zu bewegen, im ersten Schnittbereich zwischen der Ruhestellung αᵣ und dem vorbestimmten Winkel α_{z} geringer ist als im zweiten Schnittbereich zwischen dem vorbestimmten Winkel α_{z} und der geschlossenen Stellung α₀.

Um das Verhalten des veränderlichen Widerstands zu erzielen, ist bevorzugt, wenn das Federelement 10 im ersten Schnittbereich einen Abstand zum Endbereich 7 einnimmt, d.h. von Endbereich 7 beabstandet ist, und im zweiten Schnittbereich am Endbereich 7 anliegt. Dieses Verhalten ist aus den Figuren 1, 3 und 4 ersichtlich: In der Ruhestellung von Figur 1 ist das Federelement 10 nicht mit dem Endbereich 7 in Kontakt, wodurch sich die Unterschneide 6 leicht in Richtung der Oberschneide 4 drücken lässt. Sobald die Zwischenstellung von Figur 3 erreicht ist, ist das Federelement 10 in Kontakt mit dem Endbereich 7, wodurch ein zusätzlicher Widerstand vorliegt, der das Drücken der Unterschneide 6 in Richtung der Oberschneide 4 erschwert. Dieser zusätzliche Widerstand liegt vor, bis die Unterschneide 6 die geschlossene Stellung von Figur 4 erreicht. Der erhöhte Widerstand vor der geschlossenen Stellung dient vorrangig dazu, unerwünschte Geräusche zu unterbinden. Der erhöhte Widerstand tritt bevorzugt dann ein, nachdem 50 % bis 90 %, bevorzugt im Wesentlichen 70 %, des Schneidewegs von der Ruhestellung in die geschlossene Stellung erreicht werden, d.h. bevorzugt α_{z} = 0,3 * αᵣ.

Alternativ dazu kann das Federelement 10 zur Erreichung eines veränderlichen Widerstands entsprechend ausgeformt sein, ohne dass es einer Interaktion mit dem Endbereich 7 bedarf, beispielsweise wenn das Federelement 10 einen veränderlichen Querschnitt und/oder eine entsprechende Krümmung aufweist,

Als Federelement 10 wird bevorzugt ein gebogener Draht eingesetzt, der einen Durchmesser hat, der geringer ist als die Dicke des zweiten Schneidelements 3, wie dies in Figur 2 dargestellt ist. Dadurch kann das Federelement 10 derart um den Endbereich 7 des zweiten Schneidelements 3 geführt sein, dass es nicht über jene Breitseite des zweiten Schneidelements 3 steht, die dem ersten Schneidelement 2 angewandt ist.

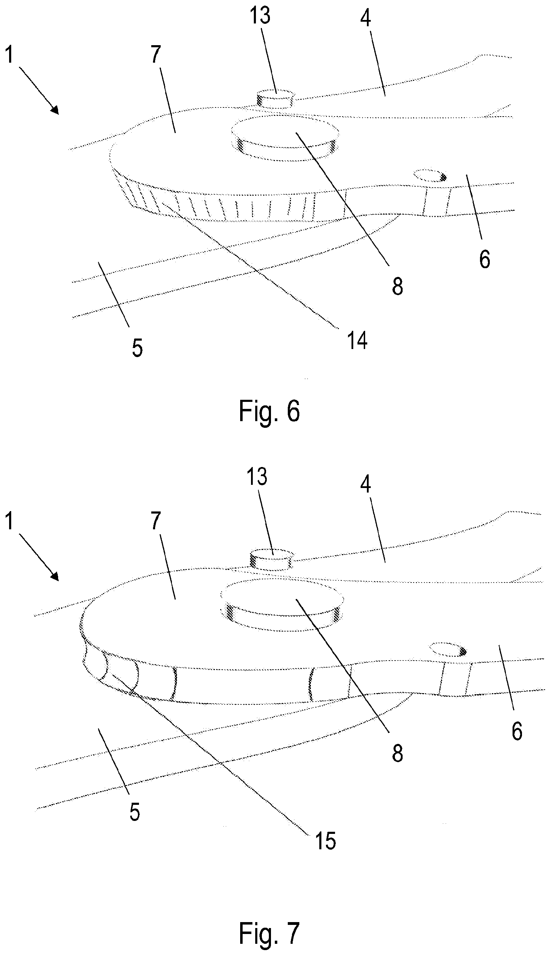

Damit das Federelement 10 beim Schneiden mit dem Schneidewerkzeug 1 nicht vom Endbereich 7 rutscht, können Maßnahmen wie in Figur 6 und 7 gezeigt vorgenommen werden.

In der Ausführungsform von Figur 6 ist der Endbereich 7 mit einem Schrägschliff 14 versehen, sodass der Endbereich 7 in Richtung des ersten Schneidelements 2 verjüngt ist. Dadurch verbleibt das Federelement 10 selbst dann am Endbereich 7, wenn die Unterschneide 6 in Richtung der Oberschneide 4 und damit das Federelement 10 an den Endbereich 7 gedrückt wird. Alternativ kann der Endbereich 7 mit einer Rille 15 versehen sein, die sich entlang des Umfangs des Endbereichs 7 erstreckt, wie dies in Figur 7 gezeigt ist. Wird das Federelement 10 an den Endbereich gedrückt, wird dieses sicher in der Rille 15 aufgenommen und springt nicht vom Endbereich 7 ab.

Das Material des Schneidewerkzeugs 1 kann je nach Anwendungszweck gewählt werden. Als Material für das erste und das zweite Schneidelement 2, 3 wird beispielsweise Metall, insbesondere rostfreier Stahl, oder auch Keramik verwendet, sodass insbesondere Hygienestandards für das Schneidewerkzeug 1 eingehalten werden können, wenn dieses zum Schneiden von Lebensmitteln eingesetzt wird. Der Griff 5 des ersten Schneidelements 2 kann zudem mit zwei Holz- oder Kunststoffbauteilen 16 (Figuren 1 bis 4) versehen sein, um einen ergonomischen Griff zu erhalten. Alternativ könnte der Griff 5 in einer schlauchartigen Hülle aufgenommen sein.

Auch die Dimensionen des Schneidewerkzeugs 1 können frei gewählt werden. Die Länge des ersten Schneidelements 2 liegt in einer bevorzugten Ausführungsform bei 22 cm, wobei die Längen der Oberschneide 4 und der Unterschneide 6 jeweils 7,5 cm und die Dicken des ersten bzw. zweiten Schneidelements 2, 3 jeweils 2 mm betragen. Im Allgemeinen ist bevorzugt, wenn die Länge des ersten Schneidelements 2 zwischen 10 cm und 30 cm, die Längen der Oberschneide 4 und der Unterschneide 6 jeweils zwischen 4 cm und 12 cm und die Dicken des ersten bzw. zweiten Schneidelements 2, 3 jeweils zwischen 1 mm und 3 mm betragen.

Weiters kann die Unterschneide 6 eine Nase 17 aufweisen, die erstens dabei hilft, zu schneidendes Lebensmittel zwischen die Unterschneide 6 und die Oberschneide 4 einzuführen. Wenn die Nase 17 zudem in der geschlossenen Stellung der Unterschneide 6 über die Oberschneide 4 hervorsteht, wie dies in Figur 4 gezeigt ist, kann die Nase 17 als Hilfsmittel eingesetzt werden, um eine Verklemmung in der geschlossenen Stellung zu beheben. Zu diesen Zweck kann das Schneidewerkzeug 1 umgedreht werden, sodass eine Kraft auf die Nase 17 ausgeübt werden kann, um die Unterschneide 6 von der Oberschneide 4 zu lösen.

In den Figuren 1, 3 und 4 sind geschwungene Schneiden 4, 6 bzw. geschwungene Schneidkanten der Schneiden 4, 6 dargestellt. Diese Form ermöglicht, dass besonders dicke bzw. mehrlagige Gegenstände geschnitten werden können. Insbesondere ermöglicht die geschwungene Form ein besonders effizientes Schneiden von Lebensmitteln. In anderen Ausführungsformen können die Schneiden 4, 6 bzw. die Schneidkanten der Schneiden 4, 6 jedoch auch gerade ausgebildet sein. Dies ermögliche insbesondere das Schneiden von dünnen Gegenständen wie Papier, Stoffen oder Folien. Es versteht sich somit, dass die

Erfindung nicht auf eine spezielle Form der Schneiden 4, 6 bzw. der Schneidkanten eingeschränkt ist.

Der Schutzumfang der vorliegenden Erfindung wird durch die angefügten Ansprüche definiert.

## Patentansprüche

1. Schneidewerkzeug (1), insbesondere zum Schneiden von flachen Lebensmitteln, umfassend ein erstes Schneidelement (2) und ein zweites Schneidelement (3), welches am ersten Schneidelement (2) um eine Drehachse (A) verschwenkbar gelagert ist,
wobei das erste Schneidelement (2) eine Oberschneide (4) und einen Griff (5) aufweist, zwischen welchen die Drehachse (A) angeordnet ist, und das zweite Schneidelement (3) eine Unterschneide (6) und einen grifflosen Endbereich (7) aufweist, zwischen welchen die Drehachse (A) angeordnet ist,
wobei das Schneidewerkzeug (1) ferner ein Federelement (10) aufweist, welches mit einem ersten Ende (11) an der Oberschneide (4) und mit einem zweiten Ende (12) an der Unterschneide (6) befestigt ist und das erste Schneidelement (2) und das zweite Schneidelement (3) in eine vorbestimmte Ruhelage spreizt,
**dadurch gekennzeichnet, dass**
das Federelement (10) zumindest teilweise um den Endbereich (7) des zweiten Schneidelements (3) geführt ist,
wobei das Federelement (10) über einen ersten Schnittbereich einer Schnittbewegung der Unterschneide (6) einen geringeren Widerstand entgegensetzt als über einen zweiten Schnittbereich, wobei der erste Schnittbereich zwischen der Ruhelage des zweiten Schneidelements (3) und einem vorbestimmten Winkel und der zweite Schnittbereich zwischen dem vorbestimmten Winkel des zweiten Schneidelements (3) und der geschlossenen Stellung des zweiten Schneidelements (3) liegt.

2. Schneidewerkzeug (1) nach Anspruch 1, wobei das Federelement (10) um den gesamten Endbereich (7) geführt ist.

3. Schneidewerkzeug (1) nach Anspruch 1 oder 2, wobei das Federelement (10) im ersten Schnittbereich einen Abstand zum Endbereich (7) einnimmt und im zweiten Schnittbereich am Endbereich (7) anliegt.

4. Schneidewerkzeug (1) nach einem der Ansprüche 1 bis 3, wobei das Federelement (10) derart an der Oberschneide (4) befestigt ist, dass die Unterschneide (6) in der geschlossenen Stellung des zweiten Schneidelements (3) am Federelement (10) anliegt.

5. Schneidewerkzeug (1) nach Anspruch 4, wobei das Federelement (10) mit einem Bolzen (13) an der Oberschneide (4) befestigt ist und sich das Federelement (10) in der geschlossenen Stellung des zweiten Schneidelements (3) zwischen der Unterschneide (6) und dem Bolzen (13) befindet.

6. Schneidewerkzeug (1) nach einem der Ansprüche 1 bis 5, wobei der Endbereich (7) des zweiten Schneidelements (3) eine Abschrägung (14) aufweist, mittels welcher das Federelement (10) am Endbereich (7) gehalten wird.

7. Schneidewerkzeug (1) nach einem der Ansprüche 1 bis 5, wobei der Endbereich (7) des zweiten Schneidelements (3) eine Rille (15) aufweist, mittels welcher das Federelement (10) am Endbereich (7) gehalten wird.

8. Schneidewerkzeug (1) nach einem der Ansprüche 1 bis 7, wobei die Unterschneide (6) endseitig eine von der Drehachse (A) abgewandte Nase (17) aufweist, welche in der geschlossenen Stellung des zweiten Schneidelements (3) bevorzugt über die Oberschneide (4) hervorragt.

9. Schneidewerkzeug (1) nach einem der Ansprüche 1 bis 8, wobei die Unterschneide (6) eine Länge von bis zu 12 cm aufweist.

## Claims

1. Cutting tool (1), in particular for cutting flat foodstuffs, comprising a first cutting element (2) and a second cutting element (3), which is mounted on the first cutting element (2) so as to be pivotable about an axis of rotation (A),
wherein the first cutting element (2) has an upper cutting edge (4) and a handle (5), between which the axis of rotation (A) is arranged, and the second cutting element (3) has a lower cutting edge (6) and an end region (7) without a handle, between which the axis of rotation (A) is arranged,
wherein the cutting tool (1) further comprises a spring element (10) which is fastened with a first end (11) to the upper cutting edge (4) and with a second end (12) to the lower cutting edge (6) and spreads the first cutting element (2) and the second cutting element (3) into a predetermined rest position,
**characterised in that**
the spring element (10) is guided at least partially around the end region (7) of the second cutting element (3),
wherein the spring element (10) provides less resistance to a cutting movement of the lower cutting edge (6) via a first cutting region than via a second cutting region, wherein the first cutting region lies between the rest position of the second cutting element (3) and a predetermined angle and the second cutting region lies between the predetermined angle of the second cutting element (3) and the closed position of the second cutting element (3).

2. The cutting tool (1) according to claim 1, wherein the spring element (10) is guided around the entire end region (7).

3. The cutting tool (1) according to claim 1 or 2, wherein the spring element (10) is spaced apart from the end region (7) in the first cutting region and bears against the end region (7) in the second cutting region.

4. The cutting tool (1) according to any one of claims 1 to 3, wherein the spring element (10) is fastened to the upper cutting edge (4) in such a way that the lower cutting edge (6) rests against the spring element (10) in the closed position of the second cutting element (3).

5. The cutting tool (1) according to claim 4, wherein the spring element (10) is fastened to the upper cutting edge (4) by means of a bolt (13) and the spring element (10) is located between the lower cutting edge (6) and the bolt (13) in the closed position of the second cutting element (3).

6. The cutting tool (1) according to any one of claims 1 to 5, wherein the end region (7) of the second cutting element (3) has a beveled edge (14), by means of which the spring element (10) is held at the end region (7).

7. The cutting tool (1) according to any one of claims 1 to 5, wherein the end region (7) of the second cutting element (3) has a groove (15) by means of which the spring element (10) is held at the end region (7).

8. The cutting tool (1) according to any one of claims 1 to 7, wherein the lower cutting edge (6) has a nose (17) at the end facing away from the axis of rotation (A), which nose preferably projects beyond the upper cutting edge (4) in the closed position of the second cutting element (3).

9. The cutting tool (1) according to any one of claims 1 to 8, wherein the lower cutting edge (6) has a length of up to 12 cm.

## Revendications

1. Outil de coupe (1), en particulier pour couper des aliments plats, comprenant un premier élément de coupe (2) et un deuxième élément de coupe (3), qui est monté sur le premier élément de coupe (2) de manière à pouvoir pivoter autour d'un axe de rotation (A), le premier élément de coupe (2) présentant un tranchant supérieur (4) et une poignée (5) entre lesquelles est disposé l'axe de rotation (A), et le deuxième élément de coupe (3) présentant un tranchant inférieur (6) et une zone d'extrémité (7) sans poignée entre lesquelles est disposé l'axe de rotation (A),
l'outil de coupe (1) présentant en outre un élément de ressort (10) qui est fixé par une première extrémité (11) au tranchant supérieur (4) et par une deuxième extrémité (12) au tranchant inférieur (6) et qui écarte le premier élément de coupe (2) et le deuxième élément de coupe (3) dans une position de repos prédéterminée,
**caractérisé en ce que**
l'élément de ressort (10) est guidé au moins partiellement autour de la zone d'extrémité (7) du deuxième élément de coupe (3),
l'élément de ressort (10) opposant une résistance plus faible à un mouvement de coupe du tranchant inférieur (6) sur une première zone de coupe que sur une deuxième zone de coupe, la première zone de coupe étant située entre la position de repos du deuxième élément de coupe (3) et un angle prédéterminé et la deuxième zone de coupe étant située entre l'angle prédéterminé du deuxième élément de coupe (3) et la position fermée du deuxième élément de coupe (3).

2. Outil de coupe (1) selon la revendication 1, dans lequel l'élément de ressort (10) est guidé autour de l'ensemble de la zone d'extrémité (7).

3. Outil de coupe (1) selon la revendication 1 ou 2, dans lequel l'élément de ressort (10) prend une distance par rapport à la zone d'extrémité (7) dans la première zone de coupe et s'applique contre la zone d'extrémité (7) dans la deuxième zone de coupe.

4. Outil de coupe (1) selon l'une quelconque des revendications 1 à 3, dans lequel l'élément élastique (10) est fixé au tranchant supérieur (4) de telle sorte que le tranchant inférieur (6) est en appui contre l'élément de ressort (10) lorsque le deuxième élément de coupe (3) est en position fermée.

5. Outil de coupe (1) selon la revendication 4, dans lequel l'élément de ressort (10) est fixé au tranchant supérieur (4) par un boulon (13) et l'élément de ressort (10) se trouve entre le tranchant inférieur (6) et le boulon (13) dans la position fermée du deuxième élément de coupe (3).

6. Outil de coupe (1) selon l'une quelconque des revendications 1 à 5, dans lequel la zone d'extrémité (7) du deuxième élément de coupe (3) présente un chanfrein (14) au moyen duquel l'élément de ressort (10) est maintenu sur la zone d'extrémité (7).

7. Outil de coupe (1) selon l'une quelconque des revendications 1 à 5, dans lequel la zone d'extrémité (7) du deuxième élément de coupe (3) présente une rainure (15) au moyen de laquelle l'élément de ressort (10) est maintenu sur la zone d'extrémité (7).

8. Outil de coupe (1) selon l'une quelconque des revendications 1 à 7, dans lequel le tranchant inférieur (6) présente à son extrémité un bec (17) opposé à l'axe de rotation (A), qui fait de préférence saillie au-dessus du tranchant supérieur (4) lorsque le deuxième élément de coupe (3) est en position fermée.

9. Outil de coupe (1) selon l'une quelconque des revendications 1 à 8, dans lequel le tranchant inférieur (6) présente une longueur pouvant atteindre 12 cm.
